# EUROPEAN PATENT SPECIFICATION

(11) **EP 0 910 603 B1**
(45) Date of publication and mention of the grant of the patent: **29.12.2004**
(21) Application number: 97926196.3
(22) Date of filing: 03.07.1997
(51) Int. Cl.: C08J 3/22, C09B 67/00, C08J 3/20

(54) **MASTERBATCHES AND A PROCESS FOR THEIR PREPARATION**
MASTERBATCHES UND VEFAHREN ZU IHRER HERSTELLUNG
MELANGES-MAITRES ET PROCEDES DE PREPARATION DESDITS MELANGES

(30) Priority: 10.07.1996 GB 9614510
(43) Date of publication of application: 28.04.1999
(73) Proprietor: Clariant Finance (BVI) Limited, Road Town, Tortola (VG)
(72) Inventor: CONDORELLI, Giuseppe, I-20052 Monza (IT)
(74) Representative: D'haemer, Jan Constant
(86) International application number: PCT/IB1997/000818
(87) International publication number: WO 1998/001498

(56) References cited:
- EP-A- 0 266 676
- EP-A- 0 290 092
- CA-C- 1 332 198
- DE-A- 3 150 012
- FR-A- 1 534 058
- US-A- 3 778 288
- US-A- 4 310 483

## Description

This invention relates to solid masterbatches.

Masterbatches, by which is meant concentrated preparations of additives which may be added to polymeric materials prior to the production of articles therefrom to give a desired effect in the mass to the articles, are well known to and widely used by the plastics industry. The traditional solid masterbatch comprises a high concentration of additives such as coloring substances (dyestuff or pigment) and processing or functional substances (stabilizer, flame retardant, etc.) in a solid carrier which is typically a polymeric material, a waxy product or a mixture thereof.

In a typical masterbatch manufacturing process such as disclosed in CA-C-1332198, the additive is homogeneously dispersed throughout the carrier, typically by melting the carrier, incorporating the additive therein and applying sufficient shear stress to the additive aggregates (pigment as delivered is invariably in aggregate form) in order to reduce them to primary particles. This is followed by solidifying, grinding or pelletizing. The shear stress in the molten carrier is generally applied by means of special continuous or batch kneading equipment, most commonly by extrusion. These are by nature high energy processes and the energy is generally proportional to the additive concentration and the dispersion quality of the masterbatch.

In US-A-3778288 mixing is performed in a high speed mixer but above the melting temperature of the carrier which is a wax.

It has now been found that it is possible to make a masterbatch of equal quality but with the expenditure of considerably less energy than art-recognized processes.

According to the invention, there is therefore provided a process for the production of a masterbatch without extrusion comprising the steps of
(a) adding solid particulate additive and particulate carrier to a mixer;
(b) mixing the additive and carrier while maintaining the mixture at a temperature between the softening point and the melting point of the carrier until there are formed agglomerates of carrier and additive; and
(c) cooling the mixture.

The unique feature of this invention is that an excellent product which has a performance at least equal to that of the best of the known masterbatches can be made by a process which is very easy and energy-efficient to perform.
The high speed mixer used for the process of the invention may have provision for heating and/or cooling in order to maintain the temperature of the mixture at an appropriate level. It often happens that friction between particles as a result of the act of mixing alone generates sufficient heat to raise the temperature to an appropriate level; indeed, it might in some cases be necessary to cool in order to keep the temperature below the melting point of the carrier.
Alternatively, the speed of mixing can be lowered to avoid melting of the carrier.

The design of the high speed mixer used for the process of the invention is, as previously stated, not narrowly critical to the working of the invention. Thus, features such as size and shape of vessel, impeller design and so on may be selected according to the normal practices and know-how of the art. It is recognized that a particular configuration of mixer which is optimal for one particular mixture may not be optimal for another mixture, but the selection of a suitable configuration is well within the skill of the art in every case.

The process of mixing at a temperature between softening point and melting point of the carrier is continued until "agglomerates" are formed. By "agglomerates" is meant composite particulates in which individual additive particles are held together by carrier particles. The nature of the process means that, unlike known processes where a carrier is completely melted and an additive uniformly dispersed therein, giving rise to a material which comprises additive particles completely encased in carrier, the additive particles are held together by carrier particles which have essentially retained their individual integrity and which therefore do not necessarily (and in most cases do not) completely encapsulate the additive particles. For the purposes of this invention, "essentially retained their individual integrity" does not exclude the possibility of some carrier particle coalescence and/or fusion; in fact, a reasonable degree of such coalescence and/or fusion can be tolerated. However, the carrier must not melt to form a completely additive-surrounding continuous entity - it is essential to the working of this invention that the carrier retains its particulate identity to a high degree and that the masterbatches of this invention are composed of agglomerates rather than true single heterogeneous particles.

Without limiting the scope of the invention in any way, it is believed that in the process of this invention, two things happen;
(i) where additive in aggregate form is involved, the additive aggregates are broken up into individual particles by the stirring + the action of the carrier; and
(ii) the softened carrier particles adhere to the additive particles, holding them together in agglomerates.

From this unique physical form come a number of major advantages; the masterbatch thus produced is dust-free, has excellent color strength and dispersibility as well as compatibility with a large range of polymeric materials. Moreover, it may contain up to 85% by weight of additive. The excellent granulometry obtained by the control of the temperature, the absorption of energy and the speed of the impeller during the process, is important to allow accurate and automatic dosage of the masterbatch during its application.

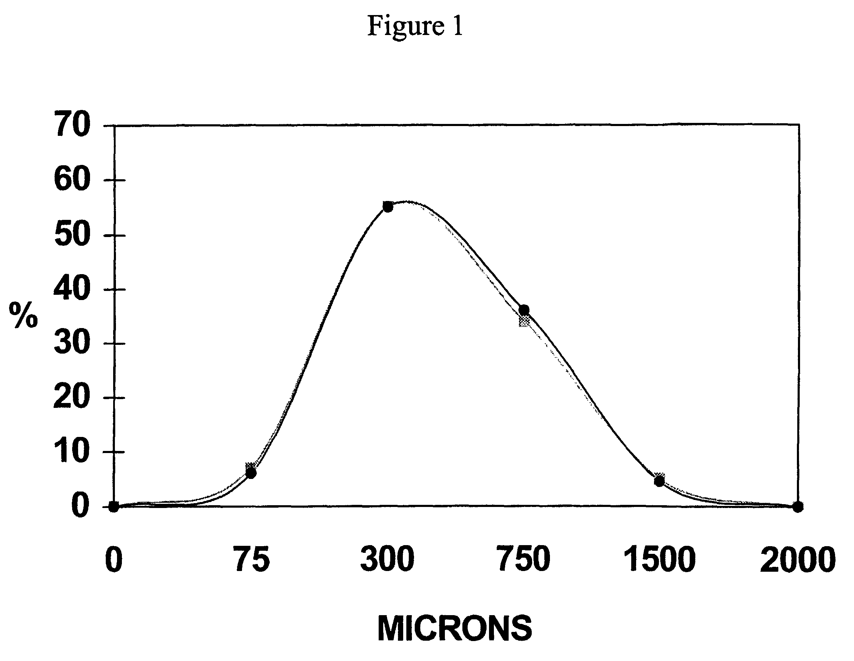

The obtained masterbatches have a well defined granulometry in that 90-95% of the agglomerates have a particle size between 75 and 1500 microns. In most cases, the particle size distribution of the final product, even in industrial application, corresponds to the typical curve of Figure 1 and the average particle size is around 300 microns.

The invention therefore also provides a particulate masterbatch which comprises an additive and a carrier, wherein the masterbatch particles are agglomerates of additive particles and carrier particles, the additive particles being segregated from each other and held together by carrier particles.

The additives are selected from any suitable solid colorants, typically an inorganic pigment, an organic pigment and/or a dyestuff, antioxidants, heat and light stabilizers, flame retardants, antiblocking agents, antimicrobials, blowing agents, photo- and biodegradants and any other additive which is usually provided in the form of masterbatch for plastics.

Preferred colorants for use in a masterbatch composition according to the invention are selected from the dyestuffs

| | |
|---|---|
| CI Disperse Yellow 54 | CI Solvent Violet 36 |
| CI Solvent Yellow 93 | CI Solvent Green 3 |
| CI Solvent Orange 60 | |
| CI Solvent Red 111 | CI Solvent Blue 97 |
| CI Solvent Red 135 | CI Solvent Blue 104 |

and from the pigments

| | |
|---|---|
| CI Pigment Black 7 | CI Pigment Red 177 |
| CI Pigment White 6 | CI Pigment Red 178 |
| CI Pigment White 7 | CI Pigment Red 214 |
| CI Pigment White 27 | CI Pigment Red 242 |
| CI Pigment Yellow 34 | CI Pigment Violet 15 |
| CI Pigment Yellow 83 | CI Pigment Violet 19 |
| CI Pigment Yellow 138 | CI Pigment Violet 23 |
| CI Pigment Yellow 139 | CI Pigment Blue 15:1 |
| CI Pigment Yellow 155 | CI Pigment Blue 15:3 |
| CI Pigment Yellow 183 | CI Pigment Blue 23 |
| CI Pigment Orange 104 | CI Pigment Blue 29 |
| CI Pigment Red 101:102 | CI Pigment Green 7 |
| CI Pigment Red 48:2 | CI Pigment Green 17 |
| CI Pigment Red 48:3 | CI Pigment Green 36 |
| CI Pigment Red 57:1 | CI Pigment Brown 24 |
| CI Pigment Red 122 | CI Pigment Metal 1. |

The carrier must naturally be a material which allows the unique products of the present invention to be prepared by the process according to the invention. Of the many carriers known to the art, only relatively few are satisfactory in this regard. A carrier for use in this invention may be selected from at least one of the materials in the following list
i) metal soaps of linear, branched or hydroxylated monocarboxylic acids with C₁₂ to C₃₀ chain length
ii) long chain fatty acids
iii) fatty amides
iv) mixed polyesters obtained by condensation of a polyol having 2 to 6 hydroxy groups with monocarboxylic acids having C₁₂ to C₃₀ chain length and aliphatic dicarboxylic acids, and
v) esters of linear, branched or hydroxylated monocarboxylic acids having C₁₂ to C₃₀ chain length with alcohols having C₁₂ to C₃₀ chain length or polyols with 2 to 6 hydroxy groups
provided that at least one of them is selected from the materials of the group "iv" or "v".

The only materials which are satisfactory on their own are the materials of group "iv" or "v". Typical materials include a polyester produced from glycerol or pentaerythritol, adipic and stearic or octadecanoic acid or an ester produced from glycerol or pentaerythritol and stearic, octadecanoic or hydroxystearic acid.

It is, however, preferred to use the group "iv" or "v" materials in combination with another one of the materials in the list. A particularly good combination is the combination of group "iv" or "v" material with group "i" in the proportion of 1 part of metal soap to 3 parts of polyester or ester.

Preferred metal soaps are magnesium or calcium stearate, hydroxystearate, octadecanoate or behenate.

Preferred fatty acids and other carboxylic acids include stearic, behenic, oleic and montanic acid, as well as hydroxy derivatives of these acids.

Preferably the carrier has a melting point between 40 and 150°C, more preferably between 40 and 120°C.

In a masterbatch composition according to the invention, the amount of additive present is preferably 30-85%, more preferably 40-80% and the amount of carrier present is preferably 70-15%, more preferably 60-20%, all percentages being by weight. Especially with organic pigments, it is possible to obtain very concentrated masterbatches containing up to 70% by weight of organic pigment.

The masterbatches of the invention are substantially dust-free and have good dispersibility in polymeric material which is illustrated by low values in the so-called filter test. This test is performed by extruding a granulated blend of masterbatch (17.5% of organic pigment resp. 25% of inorganic pigment in LDPE with MFI 70) with neutral resin through a filter packet with 80/325/80 mesh ASTM and measuring the pressure increase. The present invention also avoids the need to extrude or knead the mixture to form a masterbatch and thereby provides good mixability in polymeric material to which it is applied.

Further, according to the invention, there is provided a polymer composition containing polymeric material and 0.05 to 3% (preferably 0.1 to 1%) based on the weight of the polymeric material of a masterbatch according to the invention. For specific applications concentrations of up to 15% by weight can be possible.

The masterbatches according to the invention are suitable for incorporating additive to any polymeric material, with which solid masterbatches may be used, typical examples being ABS, acetal, acrylic, acrylonitrile, allyl, cellulosic, chlorinated PE, epoxy, epoxy-polyester, ethylene-vinyl alcohol (EVOH), fluoroplastics, ketones, melamine formaldehyde, melamine phenolic, phenolic, polyamide, polyamide-imide, polybutadiene, polybutylene, polycarbonate, polyester, polyetherimide, polyethylene and ethylene copolymers, polyimide, polyphenylene oxide, polyphenylene sulfide, polyphthalamide (PPA), polypropylene, polystyrene and styrene copolymers, polyurethane, PVDC copolymers, sulfone polymers, thermoplastic elastomers, vinyl polymers and copolymers.

The masterbatches according to the invention have a good compatibility with a large range of polymeric materials and work especially well with polyolefines, vinyl polymers and copolymers as well as polyacetals, polyesters, polycarbonates, styrenic polymers and copolymers, polyurethanes, polyamides, cellulose acetates and thermoplastic rubber.

The invention will now be illustrated by the following Examples in which temperatures are given in degrees Centigrade.

### EXAMPLE 1

3.5 kg of CI Pigment Red 48:2 is mixed in a high speed mixer with 0.175 kg of calcium stearate and 3.325 kg of a mixture containing 25% of calcium octadecanoate and 75% of a polyester obtained from 16 moles stearic acid, 7 moles pentaerythritol and 6 moles adipic acid. After 12 minutes, agglomeration is completed at a final temperature of 51° and the product obtained is free flowing and dust free with high dispersion characteristics and high color strength in the majority of polymers.

### EXAMPLE 2

2.0 kg of CI Solvent Blue 104 is mixed in a high speed mixer with 0.5 kg of an ester obtained from 1 mole glycerol and 3 moles 12-hydroxystearic acid. After 22 minutes, agglomeration is completed at a final temperature of 56° and the product obtained is free flowing and dust free, easily dispersible in polystyrene, engineering and high performance polymers.

### EXAMPLE 3

2.4 kg of CI Iron Oxide Red 1101 is mixed in a high speed mixer with 0.09 kg of calcium stearate and 0.51 kg of the mixture used in Example 1. After 16 minutes, agglomeration is completed at a final temperature of 48° and the product is free flowing and dust free, easily dispersible in the majority of polymers.

### EXAMPLE 4

1 kg of CI Pigment Blue 15:3 is mixed in a high speed mixer with 0.075 kg of calcium stearate and 1.425 kg of a mixture containing 25% of calcium behenate and 75% of a polyester obtained from 7 moles pentaerythritol, 6 moles adipic acid and 16 moles stearic acid. After 13 minutes and 20 seconds, agglomeration is completed at a final temperature of 54° and the product obtained is free flowing and dust free, with high dispersion characteristics and high color strength when it is used in mass coloration of plastics.

### EXAMPLE 5

1.5 kg of CI Pigment Blue 29 is mixed in a high speed mixer with 0.5 kg of an ester obtained from 1 mole glycerol and 3 moles 12-hydroxystearic acid. After 15 minutes, agglomeration is completed at a final temperature of 56° and the product obtained is free flowing and dust free, easily dispersible in the majority of plastics.

### EXAMPLE 6

1.54 kg of CI Pigment Red 48:2 is mixed in a high speed mixer with 0.066 kg of calcium stearate and 0.594 kg of the mixture used in Example 1. After 6 minutes, agglomeration is completed at a final temperature of 64° and the product obtained at 70% pigment concentration is free flowing and dust free with high dispersion characteristics and color strength, especially in PVC application.

### EXAMPLE 7

3.5 kg of CI Pigment Green 7 is mixed in a high speed mixer with 0.21 kg of calcium stearate and 3.29 kg of the mixture used in Example 1. After 10 minutes and 30 seconds, agglomeration is completed at the final temperature of 50° and the product obtained is free flowing and dust free, easily dispersible in the majority of polymers.

### EXAMPLE 8

1 kg of CI Pigment Red 214 is mixed in a high speed mixer with 0.04 kg of calcium stearate and 0.96 kg of the mixture used in Example 1. Agglomeration is completed after 15 minutes and 15 seconds at the final temperature of 49°. The product obtained is dust free and has high dispersion characteristics in the majority of plastics.

### EXAMPLE 9

1.5 kg of CI Pigment Yellow 183 is mixed in a high speed mixer with 0.075 kg of calcium stearate and 0.925 kg of the mixture used in Example 1. Agglomeration is completed after 14 minutes and 15 seconds at the final temperature of 49°. The product obtained at 60% of pigment concentration is free flowing and dust free with high dispersion characteristics in the majority of plastics.

## Claims

1. A process for the production of a masterbatch, containing 30-85% by weight of additive without extrusion comprising the steps of
(a) adding solid particulate additive and particulate carrier to a high speed mixer;
(b) mixing the additive and carrier in the high speed mixer while maintaining the mixture at a temperature between the softening point and the melting point of the carrier until there are formed agglomerates of carrier and additive; and
(c) cooling the mixture
in which the carrier is selected from at least one of the materials of the group comprising
i) metal soaps of linear, branched or hydroxylated monocarboxylic acids with C₁₂ to C₃₀ chain length
ii) long chain fatty acids
iii) fatty amides
iv) mixed polyesters obtained by condensation of a polyol having 2 to 6 hydroxy groups with monocarboxylic acids having C₁₂ to C₃₀ chain length and aliphatic dicarboxylic acids, and
v) esters of linear, branched or hydroxylated monocarboxylic acids having C₁₂ to C₃₀ chain length with alcohols having C₁₂ to C₃₀ chain length or polyols with 2 to 6 hydroxy groups
provided that at least one of them is selected from the materials of the group "iv" or "v".

2. A process according to claim 1 in which the additive is selected- from inorganic and organic pigments and/or dyestuffs.

3. A masterbatch obtained by the process of claim 1 or 2.

4. A masterbatch obtained by a process of claim 1 or 2 which comprises 30-85% by weight of additive and a carrier, wherein the masterbatch particles are agglomerates of additive particles and carrier particles, the additive particles being segregated from each other and held together by carrier particles; the carrier being selected from at least one of the materials of the group comprising
i) metal soaps of linear, branched or hydroxylated monocarboxylic acids with C₁₂ to C₃₀ chain length
ii) long chain fatty acids
iii) fatty amides
iv) mixed polyesters obtained by condensation of a polyol having 2 to 6 hydroxy groups with monocarboxylic acids having C₁₂ to C₃₀ chain length and aliphatic dicarboxylic acids, and
v) esters of linear, branched or hydroxylated monocarboxylic acids having C₁₂ to C₃₀ chain length with alcohols having C₁₂ to C₃₀ chain length or polyols with 2 to 6 hydroxy groups
provided that at least one of them is selected from the materials of the group "iv" or "v".

5. A masterbatch according to claim 4 in which the additive is selected from inorganic and organic pigments and/or dyestuffs.

6. A masterbatch according to claim 4 in which the carrier is selected from group "iv" or "v" in combination with a material of the group "i".

7. A polymer composition containing polymeric material and 0.05-3% based on the weight of the polymeric material of a masterbatch according to claim 4.

## Patentansprüche

1. Verfahren zur Herstellung eines Masterbatches, der 30-85 Gew.-% Additiv enthält, ohne Extrusion, das die folgenden Schritte umfasst:
(a) Einbringen von festem, partikulärem Additiv und partikulärem Träger in einen Hochgeschwindigkeitsmischer;
(b) Mischen des Additivs und des Trägers in dem Hochgeschwindigkeitsmischer, wobei das Gemisch bei einer Temperatur zwischen dem Erweichungspunkt und dem Schmelzpunkt des Trägers gehalten wird, bis Agglomerate aus Träger und Additiv gebildet werden, und
(c) Abkühlen des Gemischs,
wobei der Träger aus mindestens einem der Materialien der Gruppe ausgewählt ist, die die folgenden umfasst
i) Metallseifen gerader, verzweigter oder hydroxylierter Monocarbonsäuren mit einer Kettenlänge von C₁₂ bis C₃₀
ii) langkettige Fettsäuren
iii) Fettamide
iv) gemischte Polyester, die durch Kondensation eines Polyols, das 2 bis 6 Hydroxygruppen besitzt, mit Monocarbonsäuren einer Kettenlänge von C₁₂ bis C₃₀ und aliphatischen Dicarbonsäuren erhalten werden, und
v) Ester gerader, verzweigter oder hydroxylierter Monocarbonsäuren, die eine Kettenlänge von C₁₂ bis C₃₀ besitzen, mit Alkoholen, die eine Kettenlänge von C₁₂ bis C₃₀ besitzen, oder mit Polyolen, die 2 bis 6 Hydroxygruppen besitzen,
mit der Massgabe, dass mindestens eines von ihnen aus den Materialien der Gruppe "iv" oder "v" ausgewählt ist.

2. Verfahren nach Anspruch 1, wobei das Additiv aus anorganischen und organischen Pigmenten und/oder Farbstoffen ausgewählt ist.

3. Masterbatch, der durch das Verfahren nach Anspruch 1 oder 2 erhalten wird.

4. Masterbatch, der durch ein Verfahren nach Anspruch 1 oder 2 erhalten wird und der 30-85 Gew.-% Additiv und einen Träger enthält, wobei die Masterbatch-Partikel Agglomerate aus Additivpartikeln und Trägerpartikeln sind, wobei die Additivpartikel durch die Trägerpartikel voneinander getrennt und zusammengehalten werden, wobei der Träger aus mindestens einem der Materialien der Gruppe ausgewählt ist, die die folgenden umfasst:
i) Metallseifen gerader, verzweigter oder hydroxylierter Monocarbonsäuren mit einer Kettenlänge von C₁₂ bis C₃₀
ii) langkettige Fettsäuren
iii) Fettamide
iv) gemischte Polyester, die durch Kondensation eines Polyols, das 2 bis 6 Hydroxygruppen besitzt, mit Monocarbonsäuren einer Kettenlänge von C₁₂ bis C₃₀ und aliphatischen Dicarbonsäuren erhalten werden, und
v) Ester gerader, verzweigter oder hydroxylierter Monocarbonsäuren, die eine Kettenlänge von C₁₂ bis C₃₀ besitzen, mit Alkoholen, die eine Kettenlänge von C₁₂ bis C₃₀ besitzen, oder mit Polyolen, die 2 bis 6 Hydroxygruppen besitzen,
mit der Massgabe, dass mindestens eines von ihnen aus den Materialien der Gruppe "iv" oder "v" ausgewählt ist.

5. Masterbatch nach Anspruch 4, wobei das Additiv aus anorganischen und organischen Pigmenten und/oder Farbstoffen ausgewählt ist.

6. Masterbatch nach Anspruch 4, wobei der Träger aus der Gruppe "iv" oder "v" in Kombination mit einer Substanz der Gruppe "i" ausgewählt ist.

7. Polymerzusammensetzung, die polymeres Material und 0,05-3%, bezogen auf das Gewicht des polymeren Materials, eines Masterbatches nach Anspruch 4 enthält.

## Revendications

1. Un procédé pour la production sans extrusion d'un mélange maître contenant de 30 à 85 % en poids d'additif, qui comprend les étapes consistant
(a) à ajouter un additif solide particulaire et un agent véhiculeur particulaire à un mélangeur à vitesse élevée;
(b) à mélanger l'additif et l'agent véhiculeur dans le mélangeur à vitesse élevée tout en maintenant le mélange à une température comprise entre le point de ramollissement et le point de fusion de l'agent véhiculeur jusqu'à ce qu'il se forme des agglomérats d'agent véhiculeur et d'additif; et
(c) à refroidir le mélange,
dans lequel l'agent véhiculeur est choisi parmi au moins une des substances du groupe comprenant
i) les savons métalliques d'acides monocarboxyliques linéaires, ramifiés ou hydroxylés avec une longueur de chaîne de C₁₂ à C₃₀,
ii) les acides gras à longue chaîne,
iii) les amides gras,
iv) les polyesters mixtes obtenus par condensation d'un polyol ayant de 2 à 6 groupes hydroxy avec des acides monocarboxyliques ayant une longueur de chaîne de C₁₂ à C₃₀ et des acides dicarboxyliques aliphatiques, et
v) les esters d'acides monocarboxyliques linéaires, ramifiés ou hydroxylés ayant une longueur de chaîne de C₁₂ à C₃₀ avec des alcools ayant une longueur de chaîne de C₁₂ à C₃₀ ou des polyols avec 2 à 6 groupes hydroxy,
avec la condition qu'au moins un d'entre eux soit choisi parmi les substances du groupe "iv" ou "v".

2. Un procédé selon la revendication 1, dans lequel l'additif est choisi prami les pigments inorganiques et organiques et/ou les colorants.

3. Un mélange maître obtenu par le procédé de la revendication 1 ou 2.

4. Un mélange maître obtenu par un procédé de la revendication 1 ou 2, qui comprend de 30 à 85 % en poids d'additif et d'un agent véhiculeur, dans lequel les particules du mélange maître sont des agglomérats de particules d'additif et de particules d'agent véhiculeur, les particules d'additif étant séparées les unes des autres et maintenues ensemble par les particules d'agent véhiculeur; l'agent véhiculeur étant choisi parmi au moins une des substances du groupe comprenant
i) les savons métalliques d'acides monocarboxyliques linéaires, ramifiés ou hydroxylés avec une longueur de chaîne de C₁₂ à C₃₀,
ii) les acides gras à longue chaîne,
iii) les amides gras,
iv) les polyesters mixtes obtenus par condensation d'un polyol ayant de 2 à 6 groupes hydroxy avec des acides monocarboxyliques ayant une longueur de chaîne de C₁₂ à C₃₀ et des acides dicarboxyliques aliphatiques, et
v) les esters d'acides monocarboxyliques linéaires, ramifiés ou hydroxylés ayant une longueur de chaîne de C₁₂ à C₃₀ avec des alcools ayant une longueur de chaîne de C₁₂ à C₃₀ ou des polyols avec 2 à 6 groupes hydroxy,
avec la condition qu'au moins un d'entre eux soit choisi parmi les substances du groupe "iv" ou "v".

5. Un mélange maître selon la revendication 4, dans lequel l'additif est choisi parmi les pigments inorganiques et organiques et/ou les colorants.

6. Un mélange maître selon la revendication 4, dans lequel l'agent véhiculeur est choisi parmi le groupe "iv" ou "v" en combinaison avec une substance du groupe "i".

7. Une composition polymère contenant une matière polymère et de 0,05 à 3 %, par rapport au poids de la matière polymère, d'un mélange maître selon la revendication 4.
